# FASCICULE DE BREVET EUROPEEN

(11) **EP 0 469 953 B1**
(45) Date de publication et mention de la délivrance du brevet: **20.09.1995**
(21) Numéro de dépôt: 91402019.3
(22) Date de dépôt: 19.07.1991
(51) Int. Cl.: C08L 5/00, C04B 30/02, C02F 1/52

(54) **Composition comportant un succinoglycane**
Eine Succinoglykan enthaltende Zusammensetzung
Composition comprising a succinoglycane

(30) Priorité: 30.07.1990 FR 9009670
(43) Date de publication de la demande: 05.02.1992
(73) Titulaire: RHONE-POULENC CHIMIE, 92408 Courbevoie Cédex (FR)
(72) Inventeur: Knipper, Magali, F-75019 Paris (FR); Besnard, Marie-Madeleine, F-92160 Antony (FR); David, Claire, F-75014 Paris (FR)
(74) Mandataire: Seugnet, Jean Louis

(56) Documents cités:
- EP-A- 0 013 217
- EP-A- 0 291 646
- DE-B- 1 297 048
- FR-A- 2 603 272
- US-A- 3 406 114

## Description

La présente invention concerne une composition comportant un polysaccharide obtenu par fermentation microbienne du type succinoglycane et un polysaccharide cationique, ainsi que des applications de ladite composition.

Il est connu d'utiliser de la gomme Xanthane, éventuellement additionnée d'autres gommes du type gomme de caroube, agar-agar, guaranates ou alginates, en association avec un agent flocculant à base d'un métal du groupe du fer et/ou de l'aluminium (EP-A-13217).

Des polysaccharides dont le motif de base contient du glucose, du galactose et un reste succinyle, sont bien connus. Ils sont généralement désignés comme étant des succinoglycanes. Ces polysaccharides sont habituellement obtenus par fermentation d'une source carbonée au moyen d'un micro-organisme.

De tels polysaccharides et leurs procédés de préparation ont été décrits notamment dans la demande de brevet européen n° 351 303, dans la demande de brevet européen n° 40 445, ainsi que dans Carbohydrate Research, 73 (1979) pp. 159-168, de Clarence A. Knutson.

Les succinoglycanes sont connus comme agents gélifiants dans une composition provoquant la décomposition de l'ozone ; un dérivé de la cellulose peut également être présent comme agent gélifiant auxiliaire (FR-A-2.603.272).

Les polysaccharides succinoglycanes peuvent être utilisés pour la flocculation de particules finement divisées suspendues en milieu aqueux (US-A-3.406.114).

La présente invention concerne une composition caractérisée en ce qu'elle comporte :
. au moins un succinoglycane dont le motif de base contient du glucose, du galactose et un reste succinyle en quantités relatives correspondant à 5 à 8 moles (de préférence 6 à 7,5 moles) de glucose pour 1 à 3 moles (de préférence 1 à 2 moles) de galactose et pour 0,5 à 2 moles (de préférence 0,5 à 1 mole) de reste succinyle, ledit succinoglycane étant préparé par fermentation d'une source carbonée au moyen d'un microorganisme Agrobacterium, Arthrobacter, Rhizobium, Alcaligenes ou Pseudomonas ;
. ainsi qu'au moins un polysaccharide cationique choisi parmi les dérivés cationiques d'amidon, de galactomannane ou de guar :
selon un rapport poids de succinoglycane/poids de polysaccharide cationique compris entre 5/95 et 95/5, de préférence entre 30/70 et 70/30.

En outre, le motif de base desdits succinoglycanes peut contenir des restes d'autres acides organiques, tels que des restes pyruviles ou acétyles en quantité correspondant a 5 à 8 moles de glucose pour 0,01 à 2 moles de restes d'acides organiques, ainsi que d'autres sucres comme l'acide glucuronique et/ou le mannose en quantité correspondant à 0 à 1 mole d'autres sucres pour 5 à 8 moles de glucose.

Les succinoglycanes sont obtenus par fermentation d'un milieu comportant au moins une source carbonée, au moyen d'un micro-organisme Arthrobacter, tel Arthrobacter stabilis, en particulier la souche Arthrobacter stabilis NRRL-B-1973, Agrobacterium, tels Agrobacterium tumefaciens, Agrobacterium radiobacter ou Agrobacterium rhizogenes, Rhizobium, en particulier Rhizobium meliloti et Rhizobium trifolii, Alcaligenes tel Alcaligenes faecalis, en particulier la variété myxogenes ou Pseudomonas, en particulier les souches Pseudomonas sp. NCIB 11264 et NCIB 11592. Des succinoglycanes obtenus au moyen de souches Agrobacterium, notamment à l'espèce Agrobacterium tumefaciens sont particulièrement avantageux dans le cadre de la présente invention.

Parmi ces derniers succinoglycanes, on préfère tout particulièrement ceux obtenus par fermentation d'une source carbonée au moyen de la souche Agrobacterium tumefaciens I-736 déposée à la Collection Nationale de Culture des Microorganismes (CNCM).

Un tel succinoglycane, ainsi que son procédé de préparation, sont décrits dans la demande de brevet européen n° 351 303.

Les milieux de fermentation comportant la source carbonée ainsi que les procédés de fermentation sont abondamment décrits dans la littérature. On peut notamment se référer aux demandes de brevet européen n° 351 303 et 40 445.

Les dérivés cationiques des amidons et des galactomannanes, en particulier le guar cationique sont bien connus de l'homme de l'art et sont habituellement disponibles dans le commerce. Ils sont généralement préparés par éthérification ou estérification des groupements hydroxyles libres des sucres formant le polysaccharide non cationique dont ils dérivent, au moyen de composes organiques ammonium quaternaires, tel le chlorure de 2,3 époxyméthyl ammonium.

Les polysaccharides cationiques entrant dans le cadre de la présente invention ont un poids moléculaire qui est habituellement supérieur à 200 000, compris entre 200 000 et 3 000 000.

La composition selon l'invention peut comprendre, outre les polysaccharides décrits ci-dessus, un additif floculant.

Dans le cadre de la présente invention, on entend par additif floculant un composé qui permet ou favorise la formation de flocs constitués lors de la mise en solution aqueuse desdits succinoglycanes et desdits polysaccharides naturels ou de leurs dérives.

A titre d'additifs floculants, on peut citer les composés organiques ammonium quaternaire, l'ammoniaque, les polymères ou copolymères organiques anioniques de synthèse et leurs sels, ainsi que des composés à base d'un métal du groupe du fer et/ou de l'aluminium, tels que sulfate, chlorure, hydroxychlorure ou chlorosulfate d'aluminium et/ou de fer.

Les composés ammonium quaternaires peuvent être plus particulièrement les sels de n alkyltriméthylammonium, de n dialkyldiméthylammonium, de n alkyldiméthylammonium, de n alkylpyridinium et de benzalkonium. Dans ces composés, la chaîne alkyle peut comporter de 1 à 30, de préférence de 8 à 24 atomes de carbone.

Lesdits polymères ou copolymères organiques anioniques peuvent être à base d'acide acrylique ou d'acide méthacrylique, comme l'acide polyacrylique et l'acide polyméthacrylique.

Le poids en agent floculant compris dans la composition selon l'invention est généralement compris entre 0,0001 et 0,03 % du poids total des succinoglycanes et desdits polysaccharides naturels ou de leurs dérivés.

La composition selon l'invention peut être préparée par simple mélange desdits succinoglycanes et desdits polysaccharides naturels et/ou de leurs dérivés mis en poudre, ou par mélange d'un succinoglycane ou d'un desdits polysaccharides en poudre dans une solution aqueuse comportant l'autre composé.

Préférentiellement, on peut également mettre en solution ledit succinoglycane et ledit polysaccharide séparément, puis mélanger sous agitation les deux solutions obtenues. L'agitation doit être suffisante pour obtenir une solution homogène. L'additif floculant peut être ajouté à tout moment dans l'une ou l'autre desdites solutions, mais, de préférence, dans ladite solution homogène. Cette dernière peut comporter de 0,001 à 0,3 % en poids, de préférence de 0,002 à 0,6 % en poids, de la composition selon l'invention.

La présente invention concerne également un procédé pour précipiter dans un milieu aqueux une dispersion de particules solides au moyen d'une composition telle que décrite ci-dessus.

De telles particules peuvent être de nature organiques ou minérales et de dimensions diverses. Leur concentration dans le milieu aqueux ou elles sont dispersées est variable. Il est à noter ici qu'un tel effet précipitant de la composition selon l'invention est surprenant dans la mesure où il est connu que les succinoglycanes et les polysaccharides naturels ou leurs dérivés la formant, sont habituellement utilisés comme agent de suspension.

Il importe toutefois pour obtenir une bonne précipitation, que la concentration de la composition selon l'invention dans ledit milieu aqueux, soit comprise entre 0,001 et 0,5 %, de préférence de 0,005 à 0,2 % en poids.

Au cours dudit procédé, la composition selon l'invention peut être mélangée à ladite dispersion, par exemple sous la forme d'un solution homogène, telle que décrite ci-dessus.

Un procédé tel que décrit ci-dessus peut notamment être utilisé pour traiter des eaux usées comportant des particules solides en suspension et que l'on fait floculer, puis précipiter.

Ce procédé peut également servir à la préparation d'articles isolants à base de fibres minérales comportant la composition selon l'invention.

De tels articles peuvent se présenter sous la forme de panneaux ou de plaques pouvant supporter de très hautes températures. Ils peuvent dont être utilisés comme protection contre le feu, comme isolant réfractaire dans les fours thermiques et les chambres de combustion ou même comme isolant acoustique.

Outre lesdites fibres minérales et la composition selon l'invention, ces articles isolants peuvent également comporter au moins une charge minérale.

A titre de fibres minérales, on peut citer les fibres de bore, les fibres de carbone, les fibres de verre et les fibres céramiques, telles que les fibres d'alumine, de silice-alumine et de silice-alumine modifiées par d'autres oxydes tels que les oxydes de chrome, de bore, de zirconium, de calcium, de magnésium, les fibres d'oxyde de titane, de carbure de silicium, de nitrure de silicium, de carbonitrure, de nitrure de bore, ainsi que des laines minérales, comme la laine de diabase, la laine de roche ou la laine de laitier. Ces fibres ont favorablement une longueur de 0,1 à 50 mm et un diamètre de 1 à 20 microns.

Les charges minérales entrant dans la composition de l'article isolant peuvent être constituées par des silices telles les silices colloïdales, les alumines, la bentonite, la magnésie, le carbonate de calcium, le kaolin ou les silicates d'aluminium.

Les articles isolants selon l'invention peuvent être obtenus à partir d'une dispersion aqueuse de fibres minérales, pouvant éventuellement comporter ladite charge minérale, à laquelle on mélange la composition selon l'invention, de sorte que sa concentration en poids dans la dispersion soit telle qu'indiquée ci-dessus.

Une telle dispersion peut comporter de 1 à 10 %, de préférence de 4 à 6 % en poids de matières sèches.

Le mélange de la dispersion et de la composition selon l'invention, entraîne la précipitation des fibres et éventuellement des charges minérales dispersées, auxquelles est associée ladite composition.

Les matières solides peuvent alors être séparées de la phase aqueuse surnageante par un procédé physique de séparation, par exemple par filtration. Puis lesdites matières solides peuvent être mises en forme, séchées et éventuellement cuites. La mise en forme se fait selon une méthode classique, en fonction de l'usage ultérieur de l'article isolant.

Après séchage, ce dernier comporte habituellement de 30 à 90 % en poids de fibres minérales, éventuellement de 5 à 60 % en poids de charges minérales et de 0,5 à 7 %, de préférence de 1 à 5 % en poids, de la composition selon l'invention.

Les articles isolants comportant une composition selon l'invention présentent des propriétés mécaniques accrues par rapport à des articles isolants connus jusqu'alors. Mais surtout, grâce à cette composition, il est possible de réduire notablement la proportion de matières organiques contenue dans ledit article isolant. Or, une quantité trop importante de matière organique présente de nombreux inconvénients, en particulier, l'émission d'une fumée noire lors de la cuisson de l'article isolant.
Au moyen de la composition selon l'invention, il est également possible de fabriquer des articles à base de fibres de bois notamment selon un procédé similaire à celui employé pour fabriquer lesdits articles isolants, décrit ci-dessus. Selon un tel procédé, lesdites fibres minérales sont remplacés par des fibres de bois.

Les exemples suivants ont pour but d'illustrer la présente invention.

### EXEMPLE 1 :

On prépare 100 g de solution de polysaccharides en mélangeant 22 g d'une solution de Rhéozan® à 0,5 % avec 22 g d'une solution de guar cationique à 1 % et 56 g d'eau.

Le Rhéozan® est un polysaccharide du type succinoglycane commercialisé par la Société Rhône-Poulenc. Il peut être obtenu par fermentation d'une source carbonée au moyen d' une souche Agrobacterium tumefaciens I-736.

Le guar cationique utilisé est un produit commercialisé par la Société Meyhall sous le nom Meyproid 9806.

Dans un bécher de 5 litres, on disperse 22 g de fibres céramiques alumine-silice dans 2100 g d'eau, sous une agitation de 500 tours/min. Puis on introduit dans cette dispersion, toujours sous agitation, la solution de polysaccharides.

Deux minutes après, on arrête l'agitation. Les fibres précipitent. On sépare les fibres précipitées de la solution aqueuse par filtration sous vide sur un Buchner. Le gâteau de filtration est séché.

L'article isolant ainsi obtenu contient 1,5 % en poids de polysaccharides par rapport au poids des fibres.

### EXEMPLE 2 :

On procède comme dans l'exemple 1, mais au lieu de rajouter 56 g d'eau, on rajoute 56 g d'une solution aqueuse d'amidon cationique à 0,22 %. L'addition de l'amidon cationique permet une précipitation des fibres plus rapide et d'obtenir un article isolant dont les propriétés mécaniques sont encore améliorées par rapport à celles de l'article isolant de l'exemple 1. L'article isolant comporte 2,045 % en poids de polysaccharide par rapport au poids des fibres.

## Revendications

1. Composition caractérisée en ce qu'elle comporte :
. au moins un succinoglycane dont le motif de base contient du glucose, du galactose et un reste succinyle en quantités relatives correspondant à 5 à 8 moles de glucose pour 1 à 3 moles de galactose et pour 0,5 à 2 moles de reste succinyle, ledit succinoglycane étant préparé par fermentation d'une source carbonée au moyen d'un microorganisme Agrobacterium, Arthrobacter, Rhizobium, Alcaligenes ou Pseudomonas ;
. ainsi qu'au moins un polysaccharide cationique choisi parmi les dérivés cationiques d'amidon, de galactomannane ou de guar ;
selon un rapport poids de succinoglycane/poids de polysaccharide cationique compris entre 5/95 et 95/5.

2. Composition selon la revendication 1 caractérisée en ce que le motif de base dudit succinoglycane contient du glucose, du galactose et un reste succinyle en quantités relatives correspondant à 6 à 7,5 moles de glucose pour 1 à 2 moles de galactose,et pour 0,5 à 1 mole de reste succinyle.

3. Composition selon selon la revendication 1 ou 2 caractérisée en ce que le motif de base dudit succinoglycane comporte en outre au moins un reste acétyle, au moins un reste pyruvile, du mannose et/ou de l'acide glucuronique.

4. Composition selon l'une quelconque des revendications 1 à 3 caractérisée en ce que ledit microorganisme est Agrobacterium tumefaciens I-736.

5. Composition selon l'une quelconque des revendications 1 à 4 caractérisée en ce que le rapport poids de succinoglycane/poids de polysaccharide cationique est compris entre 30/70 et 70/30.

6. Composition selon l'une des revendications 1 à 5 caractérisée en ce qu'elle comporte en outre un additif floculant.

7. Composition selon la revendication 6 caractérisée en ce que ledit additif floculant est un composé organique ammonium quaternaire, l'ammoniaque, un polymère ou un copolymère organique anionique de synthèse et leurs sels, ou un composé à base d'un métal du groupe du fer et/ou de l'aluminium.

8. Procédé pour précipiter dans un milieu aqueux une dispersion de particules solides caractérisé en ce qu'on mélange ladite dispersion avec une composition selon l'une des revendications 1 à 7.

9. Procédé selon la revendication 8 caractérisé en ce qu'on mélange ladite dispersion avec ladite composition, de sorte que la concentration de la composition dans le milieu aqueux soit comprise entre 0,001 et 0,5 % en poids.

10. Procédé selon la revendication 9 caractérisé en ce que ladite concentration est comprise entre 0,005 et 0,2 % en poids.

11. Procédé selon l'une des revendications 8 à 10 caractérisé en ce que lesdites particules sont des fibres minérales, éventuellement en mélange avec au moins une charge minérale.

12. Procédé selon l'une des revendications 8 à 10 caractérisé en ce que lesdites particules sont des fibres de bois.

13. Articles isolants caractérisés en ce qu'ils comportent une composition selon l'une des revendications 1 à 7, des fibres minérales et éventuellement au moins une charge minérale.

14. Utilisation de la composition selon l'une des revendications 1 à 7 pour traiter des eaux usées.

## Claims

1. Composition characterized in that it contains:
· at least one succinoglycan whose basic unit contains glucose, galactose and a succinyl residue in relative quantities corresponding to 5 to 8 moles of glucose per 1 to 3 moles of galactose and per 0.5 to 2 moles of succinyl residue, the said succinoglycan being prepared by fermentation of a carbon source by means of a micro-organism Agrobacterium, Arthrobacter, Rhizobium, Alcaligenes or Pseudomonas;
· and at least one cationic polysaccharide chosen from the cationic derivatives of starch, of galactomannan or of guar;
in a weight of succinoglycan/weight of cationic polysaccharide ratio of between 5/95 and 95/5.

2. Composition according to claim 1, characterized in that the basic unit of the said succinoglycan contains glucose, galactose and a succinyl residue in relative quantities corresponding to 6 or 7.5 moles of glucose per 1 to 2 moles of galactose and per 0.5 to 1 mole of succinyl residue.

3. Composition according to claim 1 or 2, characterized in that the basic unit of the said succinoglycan comprises, in addition, at least one acetyl residue, at least one pyruvyl residue, mannose and/or glucuronic acid.

4. Composition according to any one of claims 1 to 3, characterized in that the said microorganism is Agrobacterium tumefaciens I-736.

5. Composition according to any one of claims 1 to 4, characterized in that the weight of succinoglycan/weight of cationic polysaccharide ratio is between 30/70 and 70/30.

6. Composition according to one of claims 1 to 5, characterized in that it comprises, in addition, a flocculating additive.

7. Composition according to claim 6, characterized in that the said flocculating additive is a quaternary ammonium organic compound, ammonium hydroxide, a synthetic anionic organic polymer or copolymer and their salts, or a compound based on a metal of the iron and/or aluminium group.

8. Process for precipitating, in an aqueous medium, a dispersion of solid particles, characterized in that the said dispersion is mixed with a composition according to one of claims 1 to 7.

9. Process according to claim 8, characterized in that the said dispersion is mixed with the said composition such that the concentration of the composition in the aqueous medium is between 0.001 and 0.5 % by weight.

10. Process according to claim 9, characterized in that the said concentration is between 0.005 and 0.2 % by weight.

11. Process according to one of claims 8 to 10, characterized in that the said particles are mineral fibres, optionally mixed with at least one mineral filler.

12. Process according to one of claims 8 to 10, characterized in that the said particles are wood fibres.

13. Insulating items characterized in that they comprise a composition according to one of claims 1 to 7, mineral fibres and, optionally, at least one mineral filler.

14. Use of the composition according to one of claims 1 to 7 for treating waste waters.

## Patentansprüche

1. Zusammensetzung, dadurch gekennzeichnet, daß sie enthält:
· mindestens ein Succinoglycan, dessen Basiseinheit Glukose, Galaktose und einen Succinylrest umfaßt, deren relative Mengen 5 bis 8 Mol Glukose pro 1 bis 3 Mol Galaktose und pro 0,5 bis 2 Mol Succinylrest betragen, wobei das Succinoglycan durch Fermentation eines kohlenstoffhaltigen Rohstoffes mittels eines Agrobacterium-, Arthrobacter-, Rhizobium-, Alcaligenes- oder Pseudomonas-Mikroorganismus hergestellt wird;
· sowie mindestens ein kationisches Polysaccharid, welches aus den kationischen Derivaten von Stärke, Galaktomannan oder Guaran ausgewählt ist;
wobei das Gewichtsverhältnis von Succinoglycan zu kationischem Polysaccharid zwischen 5 : 95 und 95 : 5 liegt.

2. Zusammensetzung nach Anspruch 1, dadurch gekennzeichnet, daß die Basiseinheit des Succinoglycans Glukose, Galaktose und einen Succinylrest enthält, deren relative Mengen 6 bis 7,5 Mol Glukose pro 1 bis 2 Mol Galaktose und pro 0,5 bis 1 Mol Succinylrest betragen.

3. Zusammensetzung nach Anspruch 1 oder 2, dadurch gekennzeichnet, daß die Basiseinheit des Succinoglycans zusätzlich mindestens einen Acetylrest, mindestens einen Pyruvylrest, Mannose und/oder Glucuronsäure enthält.

4. Zusammensetzung nach einem der Ansprüche 1 bis 3, dadurch gekennzeichnet, daß der Mikroorganismus Agrobacterium tumefaciens I-736 ist.

5. Zusammensetzung nach einem der Ansprüche 1 bis 4, dadurch gekennzeichnet, daß das Gewichtsverhältnis Succinoglycan zu kationischem Polysaccharid zwischen 30 : 70 und 70 : 30 liegt.

6. Zusammensetzung nach einem der Ansprüche 1 bis 5, dadurch gekennzeichnet, daß sie zusätzlich ein Flockungsmittel enthält.

7. Zusammensetzung nach Anspruch 6, dadurch gekennzeichnet, daß das genannte Flockungsmittel eine quarternäre organische Ammoniumverbindung, Ammoniak, ein anionisches organisches Synthesepolymer oder -copolymer, deren Salze oder eine Verbindung auf Basis eines Metalles der Eisen- und/oder Aluminiumgruppe ist.

8. Verfahren zur Fällung einer Dispersion aus Festpartikeln in wäßrigem Milieu, dadurch gekennzeichnet, daß man die Dispersion mit einer Zusammensetzung nach einem der Ansprüche 1 bis 7 mischt.

9. Verfahren nach Anspruch 8, dadurch gekennzeichnet, daß man die Dispersion mit der genannten Zusammensetzung vermischt, so daß die Konzentration der Zusammensetzung in dem wäßrigen Milieu 0,001 bis 0,5 Gew.-% beträgt.

10. Verfahren nach Anspruch 9, dadurch gekennzeichnet, daß die Konzentration zwischen 0,005 und 0,2 Gew.-% liegt.

11. Verfahren nach einem der Ansprüche 8 bis 10, dadurch gekennzeichnet, daß die Partikel Mineralfasern sind, gegebenenfalls in Mischung mit mindestens einem anorganischen Füllstoff.

12. Verfahren nach einem der Ansprüche 8 bis 10, dadurch gekennzeichnet, daß die Partikel Holzfasern sind.

13. Isolationsgegenstände, dadurch gekennzeichnet, daß sie eine Zusammensetzung nach einem der Ansprüche 1 bis 7, Mineralfasern und gegebenenfalls mindestens einen anorganischem Füllstoff enthalten.

14. Verwendung der Zusammensetzung nach einem der Ansprüche 1 bis 7 zur Abwasserbehandlung.
